# EUROPEAN PATENT SPECIFICATION

(11) **EP 3 426 940 B1**
(45) Date of publication and mention of the grant of the patent: **18.12.2019**
(21) Application number: 16708164.5
(22) Date of filing: 07.03.2016
(51) Int. Cl.: F16D 63/00, B60T 1/00, B25J 19/00

(54) **A BRAKE FOR AN ACTUATOR OF AN INDUSTRIAL ROBOT**
BREMSE FÜR EINEN AKTOR EINES INDUSTRIEROBOTERS
FREIN POUR UN ACTIONNEUR D'UN ROBOT INDUSTRIEL

(43) Date of publication of application: 16.01.2019
(73) Proprietor: ABB Schweiz AG, 5400 Baden (CH)
(72) Inventor: TRANGÄRD, Arne, 723 35 Västerås (SE)
(74) Representative: Savela, Reino Aleksi
(86) International application number: PCT/EP2016/054745
(87) International publication number: WO 2017/152928

(56) References cited:
- JP-A- 2007 211 875
- JP-A- 2015 232 368
- JP-A- 2016 011 676
- US-A- 4 693 665
- US-A1- 2006 110 211
- US-A1- 2013 186 717

## Description

### TECHNICAL FIELD

The present invention relates to brakes suitable for actuators in industrial robots.

### BACKGROUND ART

It is conventionally known to brake a rotation of a servo motor by means of brake pads pressing against a brake disc attached to the shaft of the motor. The braking effect is based on friction between the brake pads and the brake disc. One drawback with existing brakes is that when they get contaminated with oil, the friction and the resulting braking effect strongly decrease. Other drawbacks are that the existing brakes generate particles and that the friction may vary with the wear of the friction material.

Document US 2013/186717 A1 discloses a brake for an actuator, the brake comprising, a first element with a plurality of holes arranged at regular intervals, and a second element configured to get in one of said holes to engage the brake and to thereby oppose a relative movement between the first and the second elements.

### SUMMARY OF THE INVENTION

One object of the invention is to provide an improved brake where contamination with oil only has a minor or no influence on the braking effect.

This object is achieved by the device according to appended claim 1.

The invention is based on the realization that when braking effect is dominantly based on deformation (internal friction) of one element instead of friction between two elements, a contaminant like oil does not have a strong influence on the braking effect.

According to a first aspect of the invention, there is provided a brake for an actuator of an industrial robot. The brake comprises a first element with a plurality of legs arranged at regular intervals, and a second element configured to get in between a pair of legs to engage the brake and to thereby oppose a relative movement between the first and the second elements, the second element further being configured to get out from between the pair of legs to release the brake and to thereby allow a free relative movement between the first and the second elements. The legs are configured to bend aside such that the second element comes in between an adjacent pair of legs if braking energy needed to stop the relative movement between the first and the second elements exceeds a threshold value.

By basing the braking effect dominantly on deformation of one element instead of friction between two elements, any contaminant has little influence on the braking effect.

According to one embodiment of the invention, the legs extend radially about a first axis.

According to one embodiment of the invention, the first element is attached to a shaft configured to rotate about the first axis.

According to one embodiment of the invention, the second element is configured to move in between a pair of legs in a direction parallel with the first axis.

According to one embodiment of the invention, the second element is actuated by means of a solenoid such that the brake is released when the solenoid is activated, and the brake is engaged when the solenoid is not activated. By this measure the brake is engaged should the solenoid lose power.

According to one embodiment of the invention, the legs comprise elastomer or polymer.

According to one embodiment of the invention, the second element comprises a cylindrical pin.

According to a second aspect of the invention, there is provided an industrial robot comprising at least one joint providing a revolute pair between two robot elements, and an actuator generating a rotating relative movement between the two robot elements. The actuator comprises a brake according to any of the embodiments described hereinbefore.

According to one embodiment of the invention, the actuator is connected to the joint via a gearbox having a transmission ratio more than 10:1, such as more than 20:1, more than 50:1 or more than 100:1. The invention is particularly advantageous in combination with gearboxes with high transmission ratio as the braking effect can easily be adjusted to be relatively low, in order to prevent damaging forces within the gearbox, but still constant even in presence of a contaminant like oil to always assure maintenance of the braking effect.

### BRIEF DESCRIPTION OF THE DRAWINGS

The invention will be explained in greater detail with reference to the accompanying drawings, wherein
- figure 1: shows a brake according to one embodiment of the invention, and
- figure 2: shows an industrial robot according to one embodiment of the invention.

### DESCRIPTION OF PREFERRED EMBODIMENTS

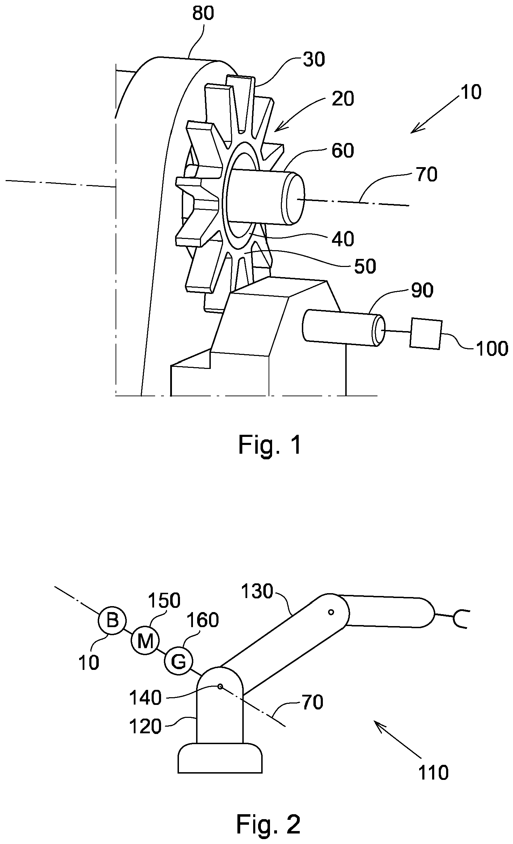

Referring to figure 1, a brake 10 according to one embodiment of the invention comprises a first element in the form of a star-shaped wheel 20 with a plurality of radially extending legs 30 at regular intervals. A hub 40 of the wheel 20 is made of metal, and an outer ring 50 comprising the legs 30 is made of an elastomer and glued on the hub 40. Alternatively, the outer ring 50 can made of a polymer. It can also be vulcanized to the hub 40. The hub 40 is attached to a shaft 60 that is rotatable about a first axis 70 in relation to a fixture 80, and whose rotation is to be braked.

A second element in the form of a cylindrical pin 90 is provided linearly movable in relation to the fixture 80. The pin 90 in configured to have two positions in each of which the pin 90 is configured to be immobile in relation to the fixture 80. The pin 90 is moved between the two positions by means of a solenoid 100. At a first position the pin 90 is in between two legs 30 of the wheel 20, and the brake 10 is thereby engaged and opposes an eventual rotation of the wheel 20 in relation to the pin 90 and the fixture 80. At a second position the pin 90 is not in between two legs 30 of the wheel 20, and the brake 10 is thereby released and allows a free rotation of the wheel 20 in relation to the pin 90 and the fixture 80. The solenoid 100 is configured such that the pin 90 is at the first position when the solenoid 100 is not activated i.e. no electric current flows through a coil of the solenoid 100, and such that the pin 90 is at the second position when the solenoid 100 is activated i.e. electric current flows through the coil.

In operation, when the brake 10 is engaged, the pin 90 opposes an eventual rotation of the wheel 20. Assuming that the wheel 20 rotates and the pin 90 is in between a first pair of legs 30, one of the legs 30 comes into contact with the pin 90 and bends aside. Depending on the braking energy needed to stop the relative movement between the pin 90 and the wheel 20, the leg 30 may bend sufficiently such that the leg 30 passes by the pin 90 which thereby comes in between a second pair of legs 30 adjacent to the first pair of legs 30. Each passing of a leg 30 absorbs a certain amount of energy, and if the braking energy needed to stop the relative movement between the pin 90 and the wheel 20 exceeds a threshold value defined by the absorbed energy at each passing of a leg 30, one or several legs 30 pass by the pin 90 before the braking energy needed to stop the relative movement between the pin 90 and the wheel 20 is reached. In a typical braking situation the wheel 20 may turn several full rotations with the brake 10 engaged before the relative movement between the pin 90 and the wheel 20 is stopped.

Referring to figure 2, an industrial robot 110 according to one embodiment of the invention comprises robot elements in the form of a carousel 120 and a lower arm 130, and a joint 140 providing a revolute pair between the carousel 120 and the lower arm 130. An actuator in the form of a servo motor 150 is connected to the joint 140 via a gearbox 160 to generate a rotating relative movement between the carousel 120 and the lower arm 130. The gearbox 160 typically has a transmission ratio more than 10:1, such as more than 20:1, more than 50:1 or more than 100:1. The servo motor 150 comprises a brake 10 according to figure 1, whereby the wheel 20 of the brake 10 is attached to the servo motor axis at an end away from the gearbox 160.

The invention is not limited to the embodiments shown above, but the person skilled in the art may modify them in a plurality of ways within the scope of the invention as defined by the claims. Thus, the invention is not limited to braking of rotational movement, but may also be applied e.g. to brake linear movement.

## Claims

1. A brake (10) for an actuator (150) of an industrial robot (110), the brake (10) comprising,
a first element (20) with a plurality of legs (30) arranged at regular intervals, and
a second element (90) configured to get in between a pair of legs (30) to engage the brake (10) and to thereby oppose a relative movement between the first and the second elements (20, 90), the second element (90) further being configured to get out from between the pair of legs (30) to release the brake (10) and to thereby allow a free relative movement between the first and the second elements (20, 90),
**characterized in that** the legs (30) are configured to bend aside such that the second element (90) comes in between an adjacent pair of legs (30) if braking energy needed to stop the relative movement between the first and the second elements (20, 90) exceeds a threshold value.

2. A brake (10) according to claim 1, wherein the legs (30) extend radially about a first axis (70).

3. A brake (10) according to claim 2, wherein the first element (20) is attached to a shaft (60) configured to rotate about the first axis (70).

4. A brake (10) according to any of claims 2-3, wherein the second element (90) is configured to move in between a pair of legs (30) in a direction parallel with the first axis (70).

5. A brake (10) according to any of the preceding claims, wherein the second element (90) is actuated by means of a solenoid (100) such that the brake (10) is released when the solenoid (100) is activated, and the brake (10) is engaged when the solenoid (100) is not activated.

6. A brake (10) according to any of the preceding claims, wherein the legs (30) comprise elastomer or polymer.

7. A brake (10) according to any of the preceding claims, wherein the second element (90) comprises a cylindrical pin (90).

8. An industrial robot (110) comprising at least one joint (140) providing a revolute pair between two robot elements (120, 130), an actuator (150) generating a rotating relative movement between the two robot elements (120, 130), the actuator (150) comprising a brake (10) according to any of the preceding claims.

9. An industrial robot (110) according to claim 8, wherein the actuator (150) is connected to the joint (140) via a gearbox (160) having a transmission ratio more than 10:1, such as more than 20:1, more than 50:1 or more than 100:1.

## Patentansprüche

1. Bremse (10) für einen Antrieb (150) eines Industrieroboters (110), wobei die Bremse (10) Folgendes umfasst:
ein erstes Element (20) mit einer Vielzahl von Schenkeln (30), die in regelmäßigen Abständen angeordnet sind, und
ein zweites Element (90), das dazu ausgelegt ist, zwischen ein Paar von Schenkeln (30) zu gelangen, um mit der Bremse (10) einzugreifen und dadurch einer relativen Bewegung zwischen dem ersten und dem zweiten Element (20, 90) entgegenzuwirken, wobei das zweite Element (90) ferner dazu ausgelegt ist, zwischen dem Paar von Schenkeln (30) heraus zu gelangen, um die Bremse (10) zu lösen und dadurch eine freie relative Bewegung zwischen dem ersten und dem zweiten Element (20, 90) zu ermöglichen,
**dadurch gekennzeichnet, dass** die Schenkel (30) dazu ausgelegt sind, sich auf eine solche Weise zur Seite zu biegen, dass das zweite Element (90) zwischen ein benachbartes Paar von Schenkeln (30) gelangt, wenn die Bremsenergie, die erforderlich ist, um die relative Bewegung zwischen dem ersten und dem zweiten Element (20, 90) zu stoppen, einen Schwellenwert übersteigt.

2. Bremse (10) nach Anspruch 1, wobei sich die Schenkel (30) radial um eine erste Achse (70) erstrecken.

3. Bremse (10) nach Anspruch 2, wobei das erste Element (20) an einer Welle (60) angebracht ist, die dazu ausgelegt ist, sich um die erste Achse (70) zu drehen.

4. Bremse (10) nach einem der Ansprüche 2 bis 3, wobei das zweite Element (90) dazu ausgelegt ist, sich zwischen ein Paar von Schenkeln (30) in einer parallel zu der ersten Achse (70) verlaufenden Richtung zu bewegen.

5. Bremse (10) nach einem der vorhergehenden Ansprüche, wobei das zweite Element (90) mit Hilfe eines Elektromagneten (100) auf eine solche Weise betätigt wird, dass die Bremse (10) gelöst wird, wenn der Elektromagnet (100) aktiviert wird, und die Bremse (10) in Eingriff gebracht wird, wenn der Elektromagnet (100) nicht aktiviert wird.

6. Bremse (10) nach einem der vorhergehenden Ansprüche, wobei die Schenkel (30) ein Elastomer oder ein Polymer umfassen.

7. Bremse (10) nach einem der vorhergehenden Ansprüche, wobei das zweite Element (90) einen zylindrischen Stift (90) umfasst.

8. Industrieroboter (110), umfassend wenigstens ein Gelenk (140), das ein Drehpaar zwischen zwei Roboterelementen (120, 130) bereitstellt, einen Antrieb (150), der eine relative Drehbewegung zwischen den zwei Roboterelementen (120, 130) erzeugt, wobei der Antrieb (150) eine Bremse (10) nach einem der vorhergehenden Ansprüche umfasst.

9. Industrieroboter (110) nach Anspruch 8, wobei der Antrieb (150) über ein Getriebe (160), das ein Übersetzungsverhältnis aufweist, das höher als 10:1, wie zum Beispiel höher als 20:1, höher als 50:1 oder höher als 100:1 ist, mit dem Gelenk (140) verbunden ist.

## Revendications

1. Frein (10) pour un actionneur (150) d'un robot industriel (110), le frein (10) comprenant
un premier élément (20) avec une pluralité de segments (30) agencés à des intervalles réguliers, et un second élément (90) configuré pour aller entre une paire de segments (30) pour entrer en prise avec le frein (10) et pour ainsi s'opposer à un mouvement relatif entre le premier et le second éléments (20, 90), le second élément (90) étant en outre configuré pour sortir d'entre la paire de segments (30) pour relâcher le frein (10) et pour ainsi permettre un mouvement relatif libre entre le premier et le second éléments (20, 90), **caractérisé en ce que** les segments (30) sont configurés pour fléchir sur le côté de telle sorte que le second élément (90) arrive entre une paire adjacente de segments (30) si l'énergie de freinage nécessaire pour arrêter le mouvement relatif entre le premier et le second éléments (20, 90) dépasse une valeur de seuil.

2. Frein (10) selon la revendication 1, dans lequel les segments (30) s'étendent radialement autour d'un premier axe (70).

3. Frein (10) selon la revendication 2, dans lequel le premier élément (20) est attaché à un arbre (60) configuré pour entrer en rotation autour du premier axe (70).

4. Frein (10) selon l'une quelconque des revendications 2 et 3, dans lequel le second élément (90) est configuré pour se déplacer entre une paire de segments (30) dans une direction parallèle au premier axe (70).

5. Frein (10) selon l'une quelconque des revendications précédentes, dans lequel le second élément (90) est actionné au moyen d'un solénoïde (100) de telle sorte que le frein (10) soit relâché lorsque le solénoïde (100) est activé, et le frein (10) soit enclenché lorsque le solénoïde (100) n'est pas activé.

6. Frein (10) selon l'une quelconque des revendications précédentes, dans lequel les segments (30) comprennent un élastomère ou polymère.

7. Frein (10) selon l'une quelconque des revendications précédentes, dans lequel le second élément (90) comprend une goupille cylindrique (90).

8. Robot industriel (110) comprenant au moins une articulation (140) fournissant une paire rotoïde entre deux éléments de robot (120, 130), un actionneur (150) générant un mouvement relatif de rotation entre les deux éléments de robot (120, 130), l'actionneur (150) comprenant un frein (10) selon l'une quelconque des revendications précédentes.

9. Robot industriel (110) selon la revendication 8, dans lequel l'actionneur (150) est raccordé à l'articulation (140) par l'intermédiaire d'une boîte à engrenages (160) ayant un rapport de transmission supérieur à 10 : 1, par exemple supérieur à 20 : 1, supérieur à 50 : 1 ou supérieur à 100 : 1.
